# EUROPÄISCHE PATENTANMELDUNG

(11) **EP 0 604 682 A1**
(43) Veröffentlichungstag der Anmeldung: **06.07.1994**
(21) Anmeldenummer: 92122124.8
(22) Anmeldetag: 30.12.1992
(51) Int. Cl.: A01G 25/09

(54) **Verfahren und Vorrichtung zum Beregnen von insbes. landwirtschaftlichen Flächen**

(71) Anmelder: Wollny, Hubertus, D-55234 Bechtolsheim (DE)
(72) Erfinder: Wollny, Hubertus, D-55234 Bechtolsheim (DE)
(74) Vertreter: Rupprecht, Klaus, Dipl.-Ing.

(57) **Zusammenfassung**

Es wird ein Verfahren sowie eine Vorrichtung zum Beregnen von landwirtschaftlichen Flächen mittels eines Düsenauslegers 4 beschrieben. Das erfindungsgemäße Verfahren zeichnet sich dadurch aus, daß der Düsenausleger 4 zusätzliche zu seiner horizontalen Linearbewegung in horizontaler Richtung eine Pendelbewegung um einen Anlenkungspunkt 3 ausführt. Im Gegensatz zu den bekannten Verfahren, bei denen das Wasser auf einem vergleichsweise schmalen Streifen ausgebracht wurde, wird gemäß der Erfindung beispielsweise die gleiche Wassermenge auf einer wesentlich größeren Grundfläche ausgebracht, wodurch die angebotene Wassermenge besser im Boden versickern kann, ohne daß es zur Pfützenbildung kommt.

## Beschreibung

Die Erfindung bezieht sich auf ein Verfahren zum Beregnen von insbes. landwirtschaftlichen Flächen mittels eines mit Düsen bestückten, in im wesentlichen in horizontaler Richtung drehbaren sowie in linearer Richtung bewegbaren Auslegers, dessen Düsen über Leitungen mit einer an den Ausleger angeschlossenen Hauptleitung mit Wasser versorgt werden. Die Erfindung richtet sich ebenso auf eine Vorrichtung zur Durchführung diese Verfahrens.

Zur Beregnung von landwirtschaftlichen Flächen, einschließlich Gartenbauflächen ist es bekannt, Düsenausleger zu benutzen, um Wasser möglichst genau verteilt, dennoch sparsam, sowie auch energiesparend auf die zu beregnenden Flächen aufzubringen. Die Düsenausleger bestehen in der Regel aus einer räumlichen oder flächigen Fachwerkkonstruktion, die an einem Fahrgestell angeordnet sind, mit dem sie über die zu beregnende Ackerfläche in linearer Richtung bewegt werden. Das Fahrgestell ist hierbei an eine in der Bewegungsrichtung des Düsenauslegers verlegte Wasserleitung angeschlossen, die andernends mit einer Beregnungsmaschine verbunden ist, die eine Trommel aufweist, auf die die Wasserleitung aufgewickelt wird, wenn die Trommel in Drehung versetzt wird. Hierdurch wird die Länge der zuvor ausgelegten Wasserleitung langsam verkürzt, so daß der Düsenausleger über die landwirtschaftliche Fläche ebenso langsam bewegt wird. Auf diese Weise kommt es zu einer gleichmäßigen Beregnung durch das durch die Wasserleitung in die Düsen strömenden und dort austretenden Wassers.

In der Regel ist zu beiden Seiten des Fahrgestells je ein Düsenausleger angeordnet. Sie sind zwecks einfachen Transports teleskopisch oder klappbar verkürzbar sind. Während des Beregnungsvorgangs sind die Düsenausleger im wesentlichen senkrecht zur Bewegungsrichtung starr am Fahrgestell angeordnet. Die Düsen sind ihrerseits an den Düsenauslegern vorgesehen. Über Zuleitungen sind sie mit der am Boden liegenden Wasserleitung und dem Fahrgestell verbunden. Die Düsen sind als rund sprühende oder sektoral sprühende Düsen ausgeführt oder eingestellt. Insbesondere Düsenausleger größerer Spannweite können auch mittig und drehbar am Fahrgestell angeordnet sein. Rückstoßdüsen an beiden Enden des Auslegers versetzen diesen dann in eine drehende Bewegung.

Beiden geschilderten Auslegersystemen und insbesondere den starr am Fahrgestell angeordneten ist zu eigen, daß sie in der Zeiteinheit einen relativ schmalen Beregnungsstreifen bewässern und daß deshalb dort in kurzer Zeit große Wassermengen ankommen, die von den Böden nur ungenügend aufgenommen werden können. Die Regenintensität der bekannten Auslegerkonstruktionen ist somit zu groß.

Die Aufgabe der Erfindung besteht somit darin, ein Verfahren bzw. eine Vorrichtung der eingangs genannten Art zu schaffen, mit welchen große Wassermengen angeboten werden können, die jedoch von den Böden vollständig aufgenommen werden.

Diese Aufgabe ist bei dem erfindungsgemäßen Verfahren dadurch gelöst, daß der Ausleger in der horizontalen Richtung eine Pendelbewegung ausführt, die von der linearen Bewegung des Auslegers überlagert wird.

Der Ausleger führt somit zu beiden Seiten des Fahrgestells während seines Betriebs in horizontaler Richtung eine Pendelbewegung aus, und zwar zusätzlich zu der Fahrt, die das Fahrgestell mit dem Ausleger in linearer Richtung durchführt. Insgesamt betrachtet bringt der Ausleger somit aufgrund seiner Pendelbewegung das aus den Düsen austretende Wasser in der Zeiteinheit über eine weitaus größere Fläche als bisher aus, wodurch die spezifische Wassergabe pro Flächeneinheit in der Zeiteinheit geringer wird. Anders ausgedrückt steht dem Boden daher mehr Zeit zur Verfügung, um das in gleicher Menge wie bisher angebotene Wasser aufzunehmen. Die bei den bisher bekannten Verfahren und Systemen auftretenden oberflächigen Wasseransammlungen werden somit zuverlässig vermieden.

Die erfindungsgemäße Vorrichtung zur Durchführung des Verfahrens nach der Erfindung geht aus von einem Düsenausleger für die Beregnung landwirtschaftlicher Flächen, der auf einem Fahrgestell im wesentlichen in horizontaler Richtung drehbar gelagert ist, wobei die am Ausleger angeordneten Düsen über Zuleitungen mit einer Wasserhauptleitung verbunden sind. Gemäß der Erfindung ist hierbei der Düsenausleger zur Ausführung einer horizontalen Pendelbewegung antreibbar ausgebildet. Die Erfindung sieht vor, daß der Düsenausleger am Fahrgestell mittig gelagert ist. Dies hat zur Folge, daß bei einer Pendelbewegung der einen Hälfte des Düsenauslegers in Fahrtrichtung des Fahrgestelles die andere Hälfte eine Bewegung in entgegengesetzter Richtung ausführt. Bei dieser Pendelbewegung überstreichen die beiden Auslegerhälften also jeweils ein Kreissegment, die in ihrer flächigen Ausdehnung erheblich größer als die Streifenflächen sind, die von den bekannten starren Düsenauslegern bestrichen werden.

Auch liegt es im Rahmen der Erfindung, daß der Düsenausleger zweigeteilt am Fahrgestell angelenkt ist. In diesem Fall können beide Auslegerhälften jeweils in gleicher Richtung pendelnd bewegt werden.

Um den Transport der erfindungsgemäßen Vorrichtung im Nichtgebrauchszustand zu erleichtern, wird gemäß der Erfindung weiterhin vorgeschlagen, daß der Düsenausleger als Scherenelement ausgebildet ist, das mittels einer Antriebseinrichtung betätigbar ist. Bei Auseinanderklappen dieser Schere legen sich die Scherenteile eng an das Fahrgestell an, so daß der gesamte Düsenausleger mit seinem Fahrgestell mittels beispielsweise einer Zugmaschine relativ einfach transportabel ist. Die Ausbildung als Scherenelement hat weiter den Vorteil, daß der Düsenausleger schnell und in der Tat durch eine einzige Bedienungsperson in seine Betriebsstellung gebracht werden kann. Die hierzu erfindungsgemäß vorgesehene Antriebseinrichtung kann eine Seilwinde oder ein wasserhydraulischer Antrieb sein, welch letzterer an die Hauptleitung oder eine der Leitungen für das zu verregnende Wasser angeschlossen ist und von dort mit Energie beaufschlagt wird.

Gemäß der Erfindung ist auch vorgesehen, daß jeweils mindestens zwei Scherenelemente im wesentlichen deckungsgleich mit Abstand übereinander angeordnet sind, die mittels Spann- und Stützelementen miteinander verbunden sind. Diese erfindungsgemäße Ausbildung zeichnet sich durch eine vergleichsweise große Stabilität aus, die im Betrieb von Vorteil ist. Es empfiehlt sich hierbei, daß die Scherenelemente symmetrisch an dem Fahrgestell angeordnet sind. Auf diese Weise ist ein ausgeglichenes Fahrverhalten der angetriebenen Auslegers gegeben.

Es liegt weiterhin im Rahmen der Erfindung, daß der Ausleger mindestens eine wasserhydraulisch betätigte Antriebseinrichtung zur Ausführung der Pendelbewegung aufweist. Diese Antriebseinrichtung ist wiederum vorzugsweise ein sogenannter Flüssigkeitsmotor, der an eine Leitung angeschlossen ist, die das zu verregnende Wasser führt. Von dort aus wird er mit Energie beaufschlagt.

Schließlich liegt es im Rahmen der Erfindung, zur Ausführung der Bewegung der Scherenelemente ebenfalls eine derartige weitere wasserhydraulische Antriebseinrichtung vorzusehen. Hierbei kann es sich aus konstruktiven Gründen empfehlen, pro Auslegerarm eine solche Antriebseinrichtung bereit zu stellen.

Weitere Einzelheiten, Merkmale und Vorteile der Erfindung ergeben sich aus der folgenden Beschreibung mehrerer Ausführungsbeispiele sowie anhand der Patentansprüche und der schematischen Zeichnung. Es zeigen:
- Fig. 1: eine Draufsicht auf den erfindungsgemäßen Düsenausleger;
- Fig. 2: eine Frontansicht des Gegenstands der Fig. 1;
- Fig. 3: eine Draufsicht auf das Fahrgestell eines Düsenauslegers mit mittiger Lagerung;
- Fig. 4: eine Stirnansicht des Gegenstands der Fig. 3;
- Fig. 5: eine Draufsicht auf ein Fahrgestell mit geteiltem Düsenausleger, wobei die beiden Düsenauslegerarme seitlich am Fahrgestell gelagert sind;
- Fig. 6: eine Stirnansicht des Gegenstands der Fig. 5;
- Fig. 7: eine Stirnansicht auf ein weiteres Ausführungsbeispiel der Erfindung und
- Fig. 8: eine Draufsicht auf den Gegenstand der Fig. 7.

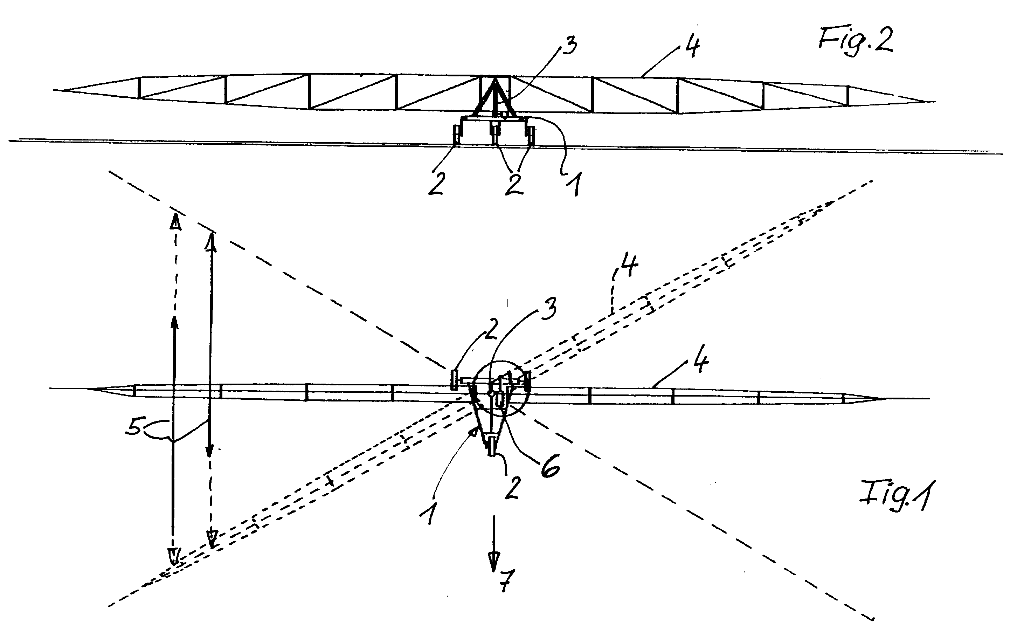

Gemäß Fig. 1 ist ein Fahrgestell 1 vorgesehen, welches an Rädern 2 verfahrbar ist. Das Fahrgestell 2 weist eine senkrecht stehende Lagerachse 3 auf, an der ein Düsenausleger 4 horizontal verschwenkbar angeordnet ist.

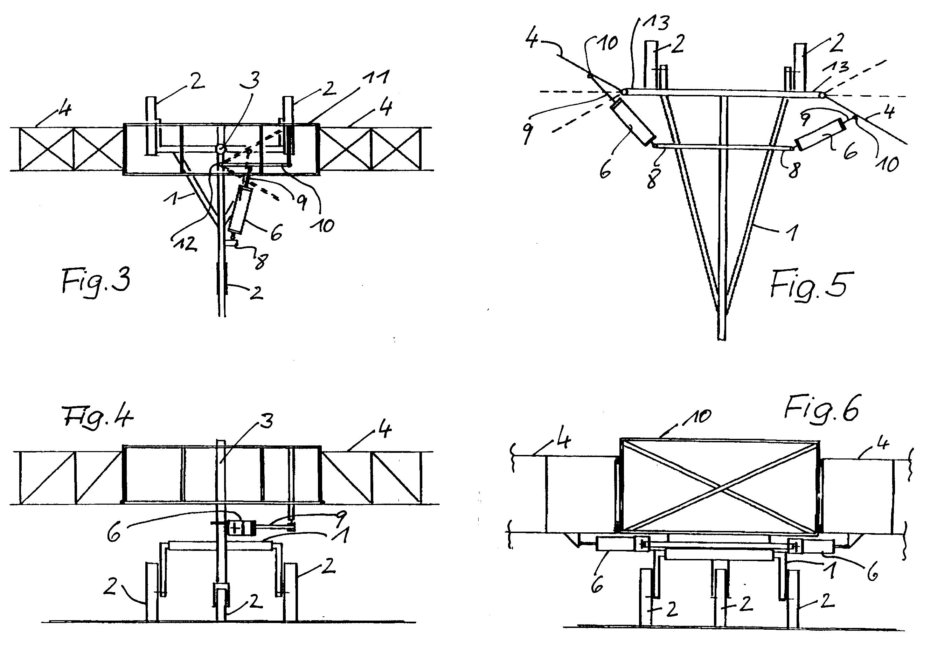

In Fig. 1 ist der durchgezogen dargestellte Düsenausleger 4 in seiner Grundposition gezeigt. Von hieraus ist er vor- und rückwärts schwenkend, also pendelnd in seine gestrichelt dargestellten Endpositionen hin- und herschwenkbar, wie es die beiden Pfeile 5 verdeutlichen. Am Fahrgestell 1 ist eine Antriebseinrichtung 6 vorhanden, die mittels eines Flüssigkeitsmotors wasserhydraulisch betätigbar ist. Sie steht mit einer Wasserleitung in Verbindung, die zur Versorgung der Düsen des Düsenauslegers 4 mit Wasser vorhanden ist. Diese Antriebseinrichtung ist in den Fig. 3 und 4 schematisch näher erläutert.

Der Düsenausleger 4 weist eine nicht näher dargestellte Wasserversorgungseinrichtung auf. Sie besteht zum einen in einer auf dem Acker bzw. der landwirtschaftlichen Fläche, auf der das Fahrgestell fährt, verlegten Schlauchleitung, die im Bereich des Fahrgestelles mit sich im Ausleger 4 erstreckenden Wasserleitungen verbunden ist. Diese Wasserleitungen enden in Düsen, die im Bereich der Unterseite des Düsenauslegers 4 angeordnet sind und bei Beaufschlagung mit Wasser gemäß Fig. 2 nach unten auf die landwirtschaftlichen Flächen oder den Boden spritzen. Das Fahrgestell 2 wird von der Schlauchleitung in Richtung des Pfeiles 7 geradlinig über die zu bewässernde landwirtschaftliche Fläche gezogen.

Auf eine nähere Darstellung der Einzelheiten von Schlauchleitung und Wasserzuleitung zu den Düsen wird verzichtet, da es sich hierbei um herkömmliche Einrichtungen auch in Verbindung mit dem Düsenausleger 4 handelt.

Gemäß der Erfindung wird zusätzlich zu dieser linearen Bewegung in Richtung des Pfeiles 7 des Fahrgestells 1 der Ausleger 4 in eine Pendelbewegung in einer horizontalen Ebene, siehe oben, versetzt, wodurch der Ausleger die beiden Kreissegmente gemäß den Pfeilen 5 zu beiden Seiten des Fahrgestells überstreicht. Die über die Düsen des Auslegers 4 nach unten ausgebrachte Wassermenge wird somit nicht mehr in Form einer streifenförmigen Fläche ausgebracht, wie dies beim Stand der Technik der Fall war, sondern über die beiden weitaus größeren Flächen zwischen den gestrichelt gezeigten Endstellungen des Auslegers 4 bei seiner Pendelbewegung.

Der Antrieb des Auslegers 4 zur Ausführung seiner Pendelbewegung ist in den Fig. 3 und 4 verdeutlicht. Eine Antriebseinrichtung 6 in Form eines wasserhydraulisch aus der nicht dargestellten Schlauchleitung mit Wasser beaufschlagten Flüssigkeitsmotors ist einenends am Fahrgestell 1 an einer Lasche 8 angelenkt. Mit seinem anderen Ende, einem Kolbenstößel 9, an einem Rahmenteil 10, das fest mit einem Befestigungsrahmen 11 verbunden ist, an dem der Ausleger 4 angeordnet ist. Das Rahmenteil 10 ist im Bereich seines anderen Endes 12 am Fahrgestell 2 angelenkt. Auf diese Weise kann durch das wasserhydraulische Bewegen des Kolbenstößels 9 der Rahmenteil 10 und mit ihm der Düsenausleger 4 in die in Fig. 3 gestrichelt dargestellten Positionen hin und her verschwenkt werden. Diese Positionen entsprechen den gestrichelt dargestellten Positionen der Fig. 1. Bei dieser Pendelbewegung wird der Ausleger 4 um die Lagerachse 3 verschwenkt.

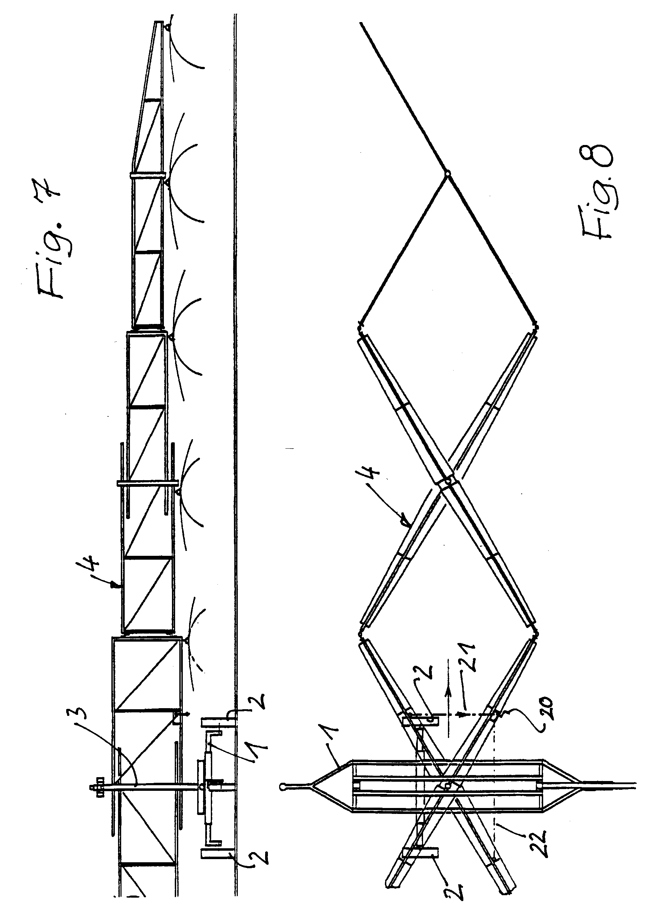

In den Fig. 5 und 6 ist eine geänderte Ausführungsform der Erfindung dargestellt. Hierbei ist der Düsenausleger 4 zweigeteilt und zu beiden Seiten des Fahrgestells 1 im Bereich der Ansätze 13 an dieses angelenkt. Es sind zwei wasserhydraulisch betätigte Antriebseinrichtungen 6 vorhanden, die im vorliegenden Fall einenends an Laschen oder Ansätzen 8 wiederum verschwenkbar angeordnet sind. Andernends sind sie über ihre Kolbenstößel 9 an den Auslegern 4 angelenkt. Durch entsprechende Steuerung der Antriebseinrichtungen 6 können die beiden Auslegerarme 4 somit zwischen ihren beiden dargestellten Endstellungen verschwenkt werden, wobei es zu der Pendelbewegung der Düsenauslegerarme 4 kommt.

Auf die erwähnte Steuerung der Antriebseinrichtungen 6 ist im vorliegenden Zusammenhang ebenfalls nicht eingegangen, da es sich hierbei um in der Landtechnik übliche Einrichtungen handelt. Die Antriebseinrichtungen sind herkömmliche Kolben-Zylinder-Anordnungen.

Bei einer linearen Geschwindigkeit des Düsenauslegers 4 von etwa 25 bis etwa 50 m/h und einer Auslegerlänge von etwa 40 bis etwa 60 m hat sich eine Frequenz des Auslegers 4 von etwa 5 Pendelschwingungen pro Stunde als vorteilhaft erwiesen.

Die Fig. 7 und 8 geben ein weiteres Ausführungsbeispiel der Erfindung wieder. Es ist dort gezeigt, daß der Düsenausleger 4 nach Art einer Schere ausgebildet sein kann. Dies dient einem arbeitssparenden Ein- und Ausfahren oder Ausklappen des Düsenauslegers. Wie ersichtlich, besteht der scherenartige Düsenausleger 4 aus mehreren Scherenteilen 4.1 bis 4.3. Durch Betätigen einer Seilwinde 20 und wechselweise der Seilzüge 21 und 22, vgl. Fig. 8 kann der Düsenausleger 4 somit ein- und ausgefahren werden. Wird der Seilzug 21 verkürzt, so kommt es zum Ausfahren des Düsenauslegers 4 in seine Einsatzposition. Wird dann der Seilzug 22 verkürzt, so wird der Düsenausleger zusammengeklappt in seine Transportposition.

## Patentansprüche

1. Verfahren zum Beregnen von insbes. landwirtschaftlichen Flächen mittels eines mit Düsen bestückten, im wesentlichen in horizontaler Richtung drehbaren sowie in linearer Richtung bewegbaren Auslegers (4), dessen Düsen über Leitungen mit einer an den Ausleger angeschlossenen Hauptleitung mit Wasser versorgt werden, dadurch gekennzeichnet, daß der Ausleger (4) in der horizontalen Richtung in eine Pendelbewegung versetzt wird, die von der linearen Bewegung des Auslegers (4) überlagert wird.

2. Düsenausleger (4) für die Beregnung insbes. landwirtschaftlicher Flächen, der auf einem Fahrgestell (1) im wesentlichen in horizontaler Richtung drehbar gelagert ist, wobei die am Ausleger (4) angeordneten Düsen über Zuleitungen mit einer Wasserhauptleitung verbunden sind, dadurch gekennzeichnet, daß der Düsenausleger (4) zur Ausführung einer horizontalen Pendelbewegung antreibbar ist.

3. Ausleger nach Anspruch 2, dadurch gekennzeichnet, daß er am Fahrgestell (1) mittig gelagert ist.

4. Ausleger nach Anspruch 2, dadurch gekennzeichnet, daß er zweigeteilt am Fahrgestell (1) angelenkt ist.

5. Ausleger nach Anspruch 1 bis 4, dadurch gekennzeichnet, daß er mindestens eine wasserhydraulisch betätigte Antriebseinrichtung zur Ausführung der Pendelbewegung aufweist.

6. Ausleger nach Anspruch 2 bis 4, dadurch gekennzeichnet, daß er als Scherenelement ausgebildet ist, das mittels einer Antriebseinrichtung betätigbar ist.

7. Ausleger nach Anspruch 6, dadurch gekennzeichnet, daß jeweils mindestens zwei Scherenelemente im wesentlichen deckungsgleich mit Abstand übereinander angeordnet sind, die mittels Spann- und Stützelementen miteinander verbunden sind.
